# EUROPEAN PATENT SPECIFICATION

(11) **EP 2 119 979 B1**
(45) Date of publication and mention of the grant of the patent: **07.09.2016**
(21) Application number: 07850330.7
(22) Date of filing: 10.12.2007
(51) Int. Cl.: F24F 13/28, B01D 46/00, F24F 1/00, F24F 3/16

(54) **FILTER CLEANING MECHANISM FOR AIR CONDITIONING APPARATUS**
FILTERREINIGUNGSMECHANISMUS FÜR KLIMATISIERUNGSVORRICHTUNG
MÉCANISME DE NETTOYAGE DE FILTRE POUR UN APPAREIL DE CLIMATISATION

(30) Priority: 11.12.2006 JP 2006333263
(43) Date of publication of application: 18.11.2009
(73) Proprietor: Daikin Industries, Ltd., Osaka 530-8323 (JP)
(72) Inventor: NAKANISHI, Junichi, Kusatsu-shi, Shiga 525-8526 (JP); MIYAGAMI, Masato, Kusatsu-shi, Shiga 525-8526 (JP); UEYAMA, Masaharu, Kusatsu-shi, Shiga 525-8526 (JP)
(74) Representative: Hoffmann Eitle
(86) International application number: PCT/JP2007/073756
(87) International publication number: WO 2008/072588

(56) References cited:
- JP-A- 07 275 626
- JP-A- 10 002 604
- JP-A- 11 226 331
- JP-A- 2006 071 121
- JP-A- 2006 153 289
- JP-A- 2007 155 311
- JP-U- 62 145 019
- JP-U- 62 160 221

## Description

### TECHNICAL FIELD

The present invention relates to a filter-cleaning mechanism of an air conditioner, and to an air conditioner.

### BACKGROUND ART

An air conditioner is usually provided with a filter for removing dust from air taken in from room interior, but airflow resistance increases when dust adheres to and accumulates on the filter. Therefore, an air conditioner comprising a filter-cleaning mechanism for automatically cleaning the filter has been proposed (see Utility Model Laid-open Application No. 62-160221).

In this type of filter-cleaning mechanism, a brush part makes contact with a filter surface, whereby dust can be removed from the filter and the filter can be cleaned. Dust adhering to the brush part can be scraped off and removed from the brush part by dust-removing pieces protruding so as to make contact with the brush part.

JP 2006/071121 relates to an air conditioner with an air filter which is reported to be easy to clean without increasing its ventilating resistance. This document discloses the features of the preamble of claim 1.

### DISCLOSURE OF THE INVENTION

### <Technical Problem>

However, with the dust-removing pieces such as those described above, it is difficult to sufficiently remove dust from the brush part, and when dust that has been missed accumulates on the brush part, there is a danger that the brush part will cause a loss of the filter-cleaning capacity.

An object of the present invention is to provide a filter-cleaning mechanism and an air conditioner whereby loss of the filter-cleaning capacity can be reduced.

### <Solution to Problem>

The filter-cleaning mechanism of an air conditioner according to a first aspect of the present invention comprises a filter for removing dust from air passing through, a brush part, a brush drive part, and a brush-cleaning part. The brush part has a core and a plurality of bristles provided in a peripheral surface of the core, wherein the bristles remove dust from the filter by making contact with the filter. The brush drive part rotates the brush part. The brush-cleaning part scrapes off dust from the brush part due to the rotation of the brush part, the brush-cleaning part being disposed along the rotational axis direction of the brush part and having a pectinate shape in contact with the brush part.

In this filter-cleaning mechanism of an air conditioner, the pectinate brush-cleaning part can easily scrape off dust retained between the bristles of the brush part. Therefore, dust can be adequately removed from the brush part, and loss of the filter-cleaning capacity can be reduced.

The filter-cleaning mechanism of the air conditioner according to a second aspect of the present invention is the filter-cleaning mechanism of the air conditioner according to the first aspect of the present invention, wherein recesses between pectinate teeth of the brush-cleaning part are positioned farther radially inward than the external periphery of a circular trajectory made by the bristles.

In this filter-cleaning mechanism of an air conditioner, the rotation of the brush part causes the bristles of the brush part to be guided between the pectinate teeth of the brush-cleaning part and to be rubbed in the recesses between the pectinate teeth. Dust can thereby be more sufficiently scraped off from the bristles.

The filter-cleaning mechanism of the air conditioner according to a third aspect of the present invention is the filter-cleaning mechanism of the air conditioner according to the second aspect of the present invention, wherein a plurality of sheaves of the bristles is provided at predetermined intervals on the core. The arrangement of the sheaves of the bristles and the arrangement of the pectinate teeth of the brush-cleaning part are set so that the rotation of the brush part causes a plurality of the sheaves of the bristles to be guided into a single recess of the pectinate teeth of the brush-cleaning part.

In this filter-cleaning mechanism of an air conditioner, the rotation of the brush part causes a plurality of the sheaves of the bristles to be guided into a single recess. Therefore, the density of the bristles guided between the pectinate teeth can be increased, and dust can be more sufficiently scraped off from the bristles.

The filter-cleaning mechanism of the air conditioner according to a fourth aspect of the present invention is the filter-cleaning mechanism of the air conditioner according to any of the first through third aspects of the present invention, further comprising a dust receiver disposed below the brush-cleaning part. The brush-cleaning part makes contact with the bristles below the core.

In this filter-cleaning mechanism of an air conditioner, the brush-cleaning part makes contact with the bristles below the core, whereby dust scraped off is efficiently dropped downwardly and retained in the dust receiver. Therefore, dust removed from the brush part can be easily disposed of.

The filter-cleaning mechanism of the air conditioner according to a fifth aspect of the present invention is the filter-cleaning mechanism of the air conditioner according to the fourth aspect of the present invention, wherein the brush-cleaning part is inclined to a side opposite to the direction in which the bristles face the pectinate teeth of the brush-cleaning part in relation to the vertical direction.

In this filter-cleaning mechanism of an air conditioner, the brush-cleaning part is inclined to the side opposite to the direction in which the bristles face the pectinate teeth of the brush-cleaning part in relation to the vertical direction. Therefore, dust can be more efficiently scraped off from the brush part. The dust removed from the brush part can be impeded from moving up the pectinate teeth back to the brush part.

The filter-cleaning mechanism of the air conditioner according to the first aspect of the present invention further comprises a frame part. The brush-cleaning part is mounted on or integrated with the frame part, and the brush part is detachably mounted on the frame part. The brush-cleaning part is provided so as not to intersect with the trajectory of the core in a direction in which the brush part is dismounted.

In this filter-cleaning mechanism of an air conditioner, since the brush-cleaning part is provided so as not to intersect with the trajectory of the core in the direction in which the brush part is dismounted, interference with the brush-cleaning part can be reduced when the brush part is dismounted. Therefore, the brush part can be easily dismounted from the frame part.

The air conditioner according to a sixth aspect of the present invention comprises the filter-cleaning mechanism according to any of the first through fifth aspects of the present invention.

In this air conditioner, the pectinate brush-cleaning part in the filter-cleaning mechanism can easily scrape off dust retained between the bristles of the brush part. Therefore, dust can be adequately removed from the brush part, and loss of the brush-cleaning capacity can be reduced.

### <Advantageous Effects of Invention>

With the filter-cleaning mechanism of an air conditioner according to the first aspect, the pectinate brush-cleaning part can easily scrape off dust retained between the bristles of the brush part. Therefore, dust can be adequately removed from the brush part, and loss of the filter-cleaning capacity can be reduced.

With the filter-cleaning mechanism of an air conditioner according to the second aspect, the rotation of the brush part causes the bristles of the brush part to be guided between the pectinate teeth of the brush-cleaning part and to be rubbed in the recesses between the pectinate teeth. Dust can thereby be more sufficiently scraped off from the bristles.

With the filter-cleaning mechanism of an air conditioner according to the third aspect, the rotation of the brush part causes a plurality of the sheaves of the bristles to be guided into a single recess. Therefore, the density of the bristles guided between the pectinate teeth can be increased, and dust can be more sufficiently scraped off from the bristles.

With the filter-cleaning mechanism of an air conditioner according to the fourth aspect, the brush-cleaning part makes contact with the bristles below the core, whereby dust scraped off is efficiently dropped downwardly and retained in the dust receiver. Therefore, dust removed from the brush part can be easily disposed of.

With the filter-cleaning mechanism of an air conditioner according to the fifth aspect, the brush-cleaning part is inclined to the side opposite to the direction in which the bristles face the pectinate teeth of the brush-cleaning part in relation to the vertical direction. Therefore, dust can be more efficiently scraped off from the brush part. The dust removed from the brush part can be impeded from moving up the pectinate teeth back to the brush part.

With the filter-cleaning mechanism of an air conditioner according to the first aspect, since the brush-cleaning part is provided so as not to intersect with the trajectory of the core in the direction in which the brush part is dismounted, interference with the brush-cleaning part can be reduced when the brush part is dismounted. Therefore, the brush part can be easily dismounted from the frame part.

With the air conditioner according to the sixth aspect, the pectinate brush-cleaning part in the filter-cleaning mechanism can easily scrape off dust retained between the bristles of the brush part. Therefore, dust can be adequately removed from the brush part, and loss of the brush-cleaning capacity can be reduced.

### BRIEF DESCRIPTION OF THE DRAWINGS

FIG 1 is an exploded perspective view of the air conditioner.
FIG 2 is a longitudinal cross-sectional view of the air conditioner.
FIG 3 is a perspective view of the brush unit.
FIG 4 is a longitudinal cross-sectional view of the brush unit.
FIG 5 is a drawing showing the positional relationship between the pectinate teeth and the sheaves of the bristles.
FIG 6 is a drawing showing the trajectory when the brush part is dismounted.
FIG 7 is a control block diagram of the air conditioner.

### EXPLANATION OF THE REFERENCE NUMERALS

- 1: Air conditioner
- 21: Filter
- 40: Filter-cleaning mechanism
- 71: Frame part
- 72: Brush part
- 73: Brush drive part
- 74: Brush-cleaning part
- 75: Dust receiver
- 76: Core
- 77: Bristle
- 78: Sheaf of bristles
- 79: Pectinate tooth
- 79a: Recess

### BEST MODE FOR CARRYING OUT THE INVENTION

### <Configuration of Air Conditioner>

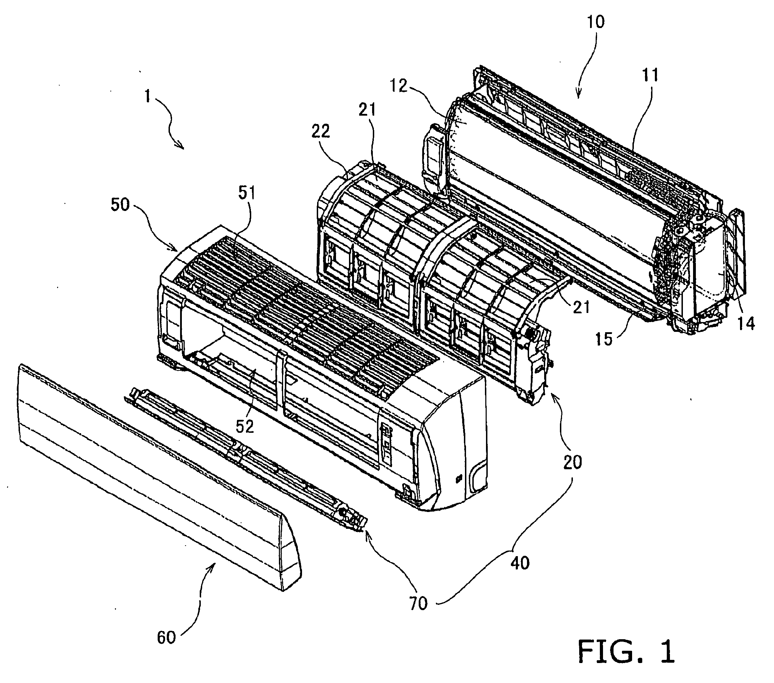

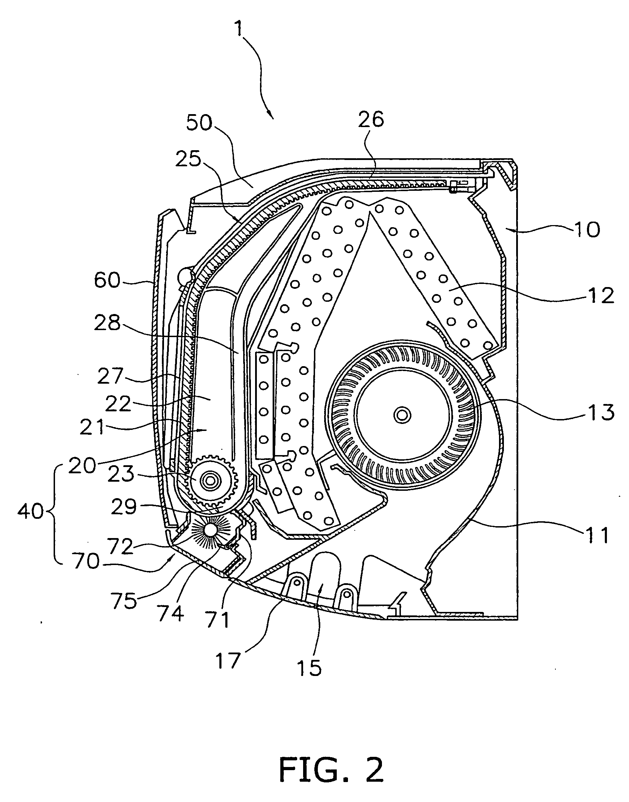

An air conditioner 1 according to an embodiment of the present invention is shown in FIGS. 1 and 2. The air conditioner 1 is a wall-mounted indoor unit mounted on a wall inside a room, and is connected to an outdoor unit (not shown) by refrigerant tubes and communication wires. The air conditioner 1 comprises a main unit 10, a front surface grill 50, a front surface panel 60, and a filter-cleaning mechanism 40. FIG. 1 is an exploded perspective view of the air conditioner 1, and FIG. 2 is a longitudinal cross-sectional view of the air conditioner 1.

### <Main Unit 10>

The main unit 10 has a bottom frame 11, an indoor heat exchanger 12, an air-blowing fan 13, an electrical component unit 14, and other components.

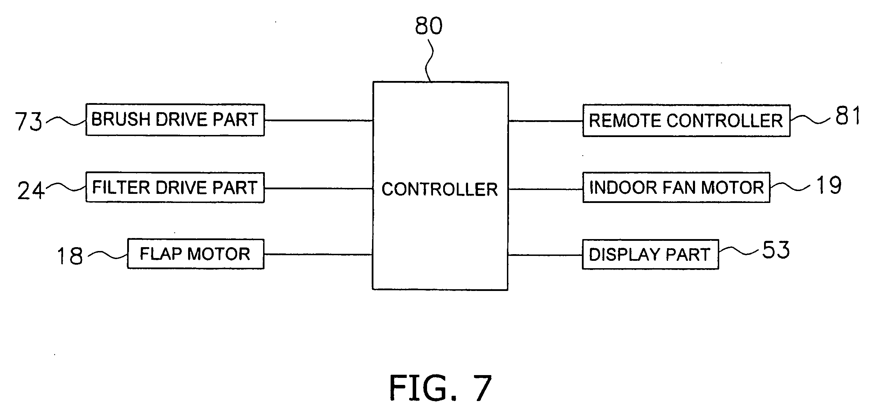

The indoor heat exchanger 12, the air-blowing fan 13, the electrical component unit 14, and other components are mounted on the bottom frame 11. Also provided in the bottom of the front surface of the bottom frame 11 are a discharge port 15 and a horizontal flap 17 for guiding air blown out from the discharge port 15. The horizontal flap 17 is rotatably driven by a flap motor 18 (see FIG. 7), and the horizontal flap 17 can change the guided direction of the air as well as open and close the discharge port 15.

The indoor heat exchanger 12 is configured from a plurality of fins and a heat transfer tube through which a refrigerant flows, and the indoor heat exchanger 12 exchanges heat with the air passing through.

The air-blowing fan 13 creates a flow of air that has been taken in from the room, adjusted in temperature by the indoor heat exchanger 12, and then blown out into the room through the discharge port 15. The air-blowing fan 13 is a cross-flow fan and is rotatably driven by an indoor fan motor 19 (see FIG. 7).

### <Front Surface Grill 50 and Front Surface Panel 60>

The front surface grill 50 is mounted so as to cover a filter unit 20, described hereinafter. A top intake port 51 is formed in the top surface of the front surface grill 50, and a front intake port 52 is formed in the front surface of the front surface grill 50, as shown in FIG. 1. A front surface panel 60 is mounted on the front surface of the front surface grill 50 so as to cover the front surface of the front surface grill. By rotating around its bottom end, the front surface panel 60 can open and close the front intake port 52 of the front surface grill 50.

The front surface grill 50 is provided with a display part 53 (see FIG. 7) for displaying the operating condition of the air conditioner 1. The display part 53 is provided so as to be visible from the front of the air conditioner 1. The display part 53 is composed of a plurality of LEDs, and the display part 53 displays the operating condition of the air conditioner 1 with or without lighting the LEDs.

### <Filter-cleaning Mechanism 40>

The filter-cleaning mechanism 40 is a mechanism for automatically cleaning dust adhered to a filter 21, and the filter-cleaning mechanism 40 comprises the filter unit 20 and a brush unit 70.

### (Filter Unit 20)

The filter unit 20 is mounted on the bottom frame 11 of the main unit 10, and the filter unit 20 comprises a filter unit frame 22, the filter 21, a filter drive gear 23, a filter drive part 24 (see FIG. 7), and other components.

The filter unit frame 22 is a member for supporting the filter 21, and is disposed on a windward side of the indoor heat exchanger 12. The filter unit frame 22 has a shape curved so as to cover the front and top of the indoor heat exchanger 12, and lattice-shaped openings are formed in the portion of the filter unit frame 22 facing the indoor heat exchanger 12. A guide part 25 in contact with the lateral end of the filter 21 to guide the filter 21 is formed in the inside surface of the filter unit frame 22, as shown in FIG 2. The guide part 25 has a top guide part 26 provided along the top surface of the filter unit frame 22, a front guide part 27 having a shape slightly curved along the front surface of the filter unit frame 22, a rear guide part 28 slightly curved along the back surface of the filter unit frame 22, and a bottom guide part 29 disposed below the bottom end of the front guide part 27 and the bottom end of the rear guide part 28. The top end of the front guide part 27 and the top end of the rear guide part 28 are both joined to the top guide part 26. The bottom guide part 29 has an arcuate shape curved convexly downward so as to fold the filter 21 back up from the front guide part 27 to the rear guide part 28 or from the rear guide part 28 to the front guide part 27.

The filter 21 is disposed on the front surface side (windward side) of the indoor heat exchanger 12 so as to allow the passage of air taken in from indoors and outdoors, and the filter 21 removes dust from the air that has passed through. The filter 21 thereby prevents dust floating in the air from contaminating the indoor heat exchanger 12. The filter 21 has a vertically symmetrical shape, and the filter 21 can be mounted on the filter unit frame 22 in either vertical orientation. The filter 21 is composed of two identically-shaped filters aligned right and left, and these filters 21 can be mounted in either left or right mounting position on the filter unit frame 22.

The filter drive gear 23 is disposed above the bottom guide part 29, creating a gap with the bottom guide part 29 through which the filter 21 passes. The filter drive gear 23 engages with the lateral end of the filter 21 and is rotatably driven by the filter drive part 24, whereby the filter 21 is moved along the guide part 25.

The filter drive part 24 is a motor controlled by a controller 80 described hereinafter, and is mounted on the filter unit frame 22. The filter drive part 24 rotatably drives the filter drive gear 23 as described above.

### (Brush Unit 70)

The brush unit 70 has the function of cleaning the filter 21, and the brush unit 70 is mounted in a position at the top of the discharge port 15 of the main unit 10 at the bottom of the front surface panel 60. The brush unit 70 does not interfere with the front surface panel 60 while the front surface panel 60 is closed, and the brush unit 70 can be mounted and dismounted externally. The brush unit 70 has a frame part 71, a brush part 72, a brush drive part 73 (see FIG. 7), a brush-cleaning part 74, and a dust receiver 75.

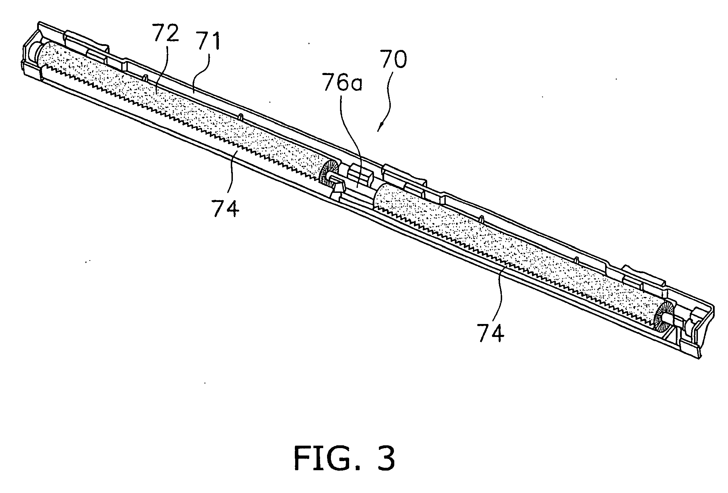

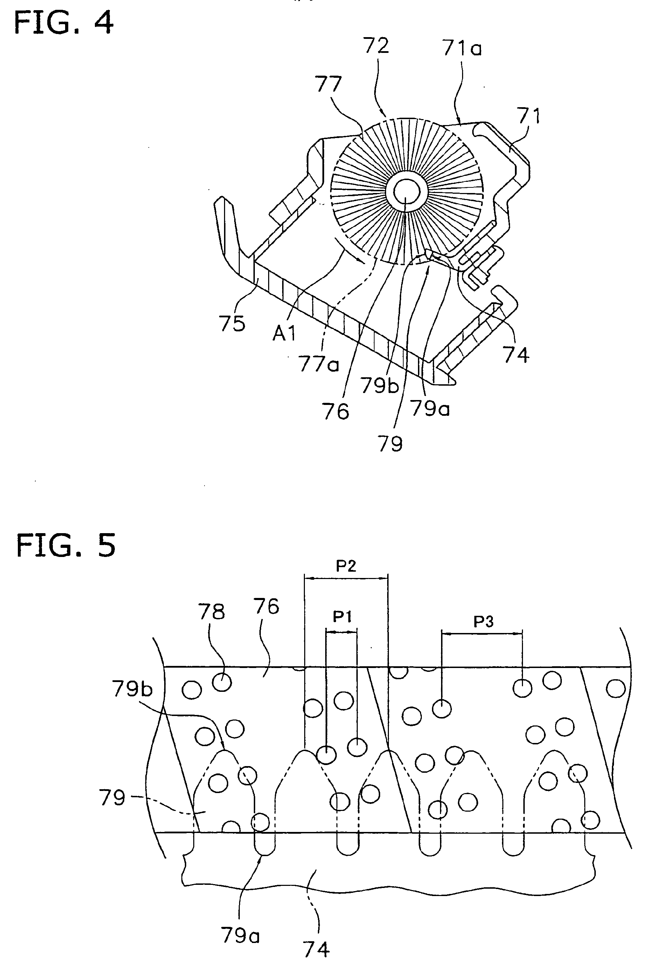

The frame part 71 has a long, thin external shape extending along the longitudinal direction of the air conditioner 1, and the brush part 72 is detachably mounted in the frame part 71, as shown in FIG. 3. FIG. 3 is a perspective view of the brush unit 70 in a state in which the dust receiver 75 has been dismounted as seen at an angle from below. An opening 71a is formed in the top surface of the frame part 71, and the brush part 72 is exposed in the upper space in the frame part 71 through the opening 71 a in the top surface of the frame part 71, as shown in FIG. 4. FIG. 4 is a longitudinal cross-sectional view of the brush unit 70. The frame part 71 is disposed so as to be positioned below the folded portion of the filter 21 when the filter 21 has been folded back in the bottom guide part 29 (see FIG 2), and the frame part 71 is configured so that the brush part 72 is in contact with the folded portion of the filter 21 through the opening 71 a in the top surface of the frame part 71. The bottom surface of the frame part 71 is left open, and is then closed off by the dust receiver 75.

The brush part 72 has a core 76 and a plurality of bristles 77 provided in a peripheral surface of the core 76 as shown in FIG 4, and the bristles 77 remove dust from the filter 21 by making contact with the filter 21. The core 76 has a long, thin cylindrical shape having a rotating shaft 76a parallel to the longitudinal direction of the air conditioner 1 (see FIG 3), and the core 76 is rotatably driven by the brush drive part 73. A plurality of sheaves 78 configured from clusters of the bristles 77 is provided in the surface of the core 76, and a plurality of the sheaves 78 are disposed at predetermined intervals, as shown in FIG 5. Specifically, the sheaves 78 of the bristles 77 are aligned along a long, thin tape in four rows in the width direction of the tape and in numerous rows in the longitudinal direction, and this tape is wound in a helical fashion around the peripheral surface of the core 76, whereby a plurality of the sheaves 78 of the bristles 77 are disposed at predetermined intervals in the peripheral surface of the core 76. In FIG. 5, the sheaves 78 of the bristles 77 are simplified and shown as circles, and a numerical symbol is appended to only one sheaf, numerical symbols being omitted from the others.

The brush drive part 73 is a motor controlled by the controller 80, described hereinafter, and the brush drive part 73 rotatably drives the brush part 72.

The brush-cleaning part 74 is mounted on the bottom end of the frame part 71, and the brush-cleaning part 74 has a pectinate shape disposed along the axial direction of the rotating shaft 76a of the brush part 72 and in contact with the brush part 72 (see FIG. 3). The brush-cleaning part 74 is in contact with the bristles 77 of the brush part 72, and the brush-cleaning part 74 can scrape off dust from the brush part 72 due to the rotation of the brush part 72. Pectinate teeth 79 of the brush-cleaning part 74 have tapering peak shapes as shown in FIG. 5, and a plurality of the sheaves 78 of the bristles 77 are readily guided into recesses 79a between the pectinate teeth 79. The arrangement of the sheaves 78 of the bristles 77 and the arrangement of the pectinate teeth 79 of the brush-cleaning part 74 are set so that the rotation of the brush part 72 causes a plurality of the sheaves 78 of the bristles 77 to be guided into a single recess 79a of pectinate teeth 79 in the brush-cleaning part 74. Specifically, pitch P1 in the axial direction of two adjacent sheaves 78 is set smaller than pitch P2 between the tips of the peaks 79b of the pectinate teeth 79, and two sheaves 78 are readily guided into a single recess 79a. Pitch P3 between two adjacent sheaves 78 and another two adjacent sheaves 78 is set greater than the pitch P1 between two adjacent sheaves 78, ensuring that numerous sheaves 78 do not collect excessively in any recesses 79a.

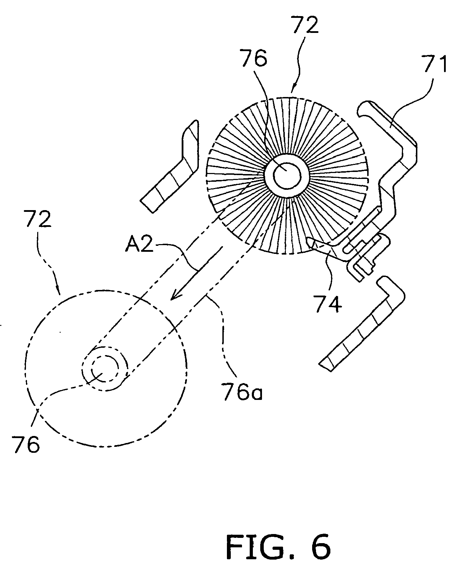

Furthermore, the brush-cleaning part 74 is provided so as to protrude into an upward and forward incline toward the brush part 72 from the bottom end on the back surface of the frame part 71 as shown in FIG. 4, and the brush-cleaning part 74 is inclined to a side opposite to the direction in which the bristles 77 face the pectinate teeth 79 of the brush-cleaning part 74 (see arrow A1 in FIG. 4) in relation to the vertical direction. The brush-cleaning part 74 is disposed on the lower side of the core 76 so as to be in contact with the distal ends of the bristles 77. Additionally, the blush-cleaning part 74 is disposed rearward of being directly below the center of the core 76, and the peaks 79b and recesses 79a between the pectinate teeth 79 of the brush-cleaning part 74 are positioned farther radially inward than the external periphery 77a of the circular trajectory of the bristles 77. The brush-cleaning part 74 is provided below the trajectory 76a of the core 76 so as not to intersect with the trajectory 76a of the core 76 in the direction in which the brush part 72 is dismounted (see arrow A2), as shown in FIG. 6.

The dust receiver 75 is disposed below the brush-cleaning part 74 when mounted on the frame part 71, as shown in FIG. 4. The dust receiver 75 can receive and retain the dust on the lower side of the brush-cleaning part 74, which is scraped off from the brush part 72 by the brush-cleaning part 74. Since the dust receiver 75 is detachably mounted on the frame part 71, dust retained in the dust receiver 75 can easily be disposed of by dismounting the dust receiver 75.

### (Controller 80)

The controller 80 shown in FIG. 7 is divided into an electrical component unit 14 of the air conditioner 1 and an electrical component unit (not shown) of the outdoor unit to allow a cooling operation, a heating operation, and various other air conditioning operations to be performed on the basis of commands from a remote controller 81 and information from various sensors (not shown). With this air conditioner 1, a filter-cleaning operation for automatically cleaning the filter 21 can also be performed. The action during the filter-cleaning operation is described hereinbelow.

First, during the aforementioned filter-cleaning operation, the operation is performed while the filter 21 remains positioned in the usual position shown in FIG. 2. In this usual position, the filter 21 is disposed along the top guide part 26 and the front guide part 27, and the bottom end of the filter 21 is positioned between the filter drive gear 23 and the bottom guide part 29. The filter-cleaning operation is started when a predetermined amount of time has elapsed since the execution of the previous filter-cleaning operation, or when another predetermined filter-cleaning operation starting condition has been met.

First, from the state in FIG. 2, the controller 80 moves the filter 21 by driving the filter drive part 24, and rotatably drives the brush part 72 by driving the brush drive part 73. The top of the filter 21 is then lowered along the top guide part 26, and the bottom of the filter 21 is folded back up in the bottom guide part 29 and raised along the rear guide part 28. At this time, the brush part 72 also rotates, and the top of the brush part 72 makes contact with the surface of the filter 21 through the opening 71 a (see FIG. 4) in the frame part 71, thereby removing dust from the surface of the filter 21. The bottom of the brush part 72 makes contact with the brush-cleaning part 74, and the rotation of the brush part 72 causes dust adhering to the brush part 72 to be scraped off from the brush part 72 into the dust receiver 75 by the pectinate teeth 79 of the brush-cleaning part 74. When the top end of the filter 21 reaches the bottom guide part 29, the filter drive part 24 is stopped, and the filter 21 stops moving.

Next, the filter drive part 24 is driven in the opposite direction, and the filter 21 moves in the opposite direction of that described above. At this time, the driving of the brush drive part 73 is stopped. When the filter 21 has returned to the usual service position shown in FIG. 2, the filter drive part 24 is stopped, and the filter-cleaning operation is complete.

During the filter-cleaning operation, the front surface panel 60 and the horizontal flap 17 both remain closed.

### <Characteristics>

### (1)

In this air conditioner 1, the rotation of the brush part 72 causes the bristles 77 of the brush part 72 to be guided between the pectinate teeth 79 of the brush-cleaning part 74 and to be rubbed in the recesses 79a between the pectinate teeth 79. Dust collected between the bristles 77 of the brush part 72 can thereby be easily scraped off. Therefore, dust can be adequately removed from the brush part 72, and loss of the filter-cleaning capacity can be reduced.

The sheaves 78 of the bristles 77 of the brush part 72, and the pectinate teeth 79 of the brush-cleaning part 74 are disposed as described above, whereby the rotation of the brush part 72 causes the plurality of the sheaves 78 of the bristles 77 to be guided into a single recess 79a of the pectinate teeth 79. Therefore, the density of the bristles 77 guided between the pectinate teeth 79 can be increased, and dust can be more sufficiently scraped off from the bristles 77.

Furthermore, the brush-cleaning part 74 is inclined to the side opposite to the direction in which the bristles 77 face the pectinate teeth 79 of the brush-cleaning part 74 in relation to the vertical direction. Therefore, the dust on the brush part 72 can be scraped off more efficiently. The dust removed from the brush part 72 readily falls downward, and the dust is impeded from moving up the pectinate teeth 79 back to the brush part 72.

### (2)

In this air conditioner 1, since the brush-cleaning part 74 is provided so as not to intersect with the trajectory of the core 76 in the direction in which the brush part 72 is dismounted, the brush part 72 is impeded from interfering with the brush-cleaning part 74 when the brush part 72 is dismounted. Therefore, when the brush part 72 is dismounted from the frame part 71, the brush-cleaning part 74 does not pose a hindrance, and the brush part 72 can be dismounted easily.

### <Other Embodiments>

### (1)

In the embodiment described above, the brush-cleaning part 74 is mounted on the frame part 71, but the brush-cleaning part 74 may also be integrated with the frame part 71.

### (2)

In the embodiment described above, the sheaves 78 of the bristles 77 of the brush part 72 are aligned in four rows in the width direction of the tape, but the number of sheaves 78 is not limited to four. In the embodiment described above, the pitches P1, P2 of the sheaves 78 of the bristles 77 and the pectinate teeth 79 are set so that two sheaves 78 are guided into a single recess 79a of the brush-cleaning part 74, but the pitch may also be set so that more than two sheaves 78 are guided into a single recess 79a within a range in which resistance is not too high.

### (3)

The filter 21 described above may be formed into a square external shape, and may be mounted on the filter unit frame 22 in either state in which the filter 21 is turned by 90 degrees. By fashioning the front and back of the filter 21 into the same shape, the filter 21 can be mounted on the filter unit frame 22 while facing in either direction.

### INDUSTRIAL APPLICABILITY

The present invention has the effect of being able to suppress loss of the filter-cleaning capacity, and can be used in a filter-cleaning mechanism and an air conditioner.

## Claims

1. A filter-cleaning mechanism (40) of an air conditioner (1), comprising:
a filter (21) for removing dust from air passing through;
a brush part (72) having a core (76) and a plurality of bristles (77) provided in a peripheral surface of the core (76), wherein the bristles (77) remove dust from the filter (21) by making contact with the filter (21);
a brush drive part (73) for rotating the brush part (72); and
a brush-cleaning part (74) for scraping off dust from the brush part (72) due to the rotation of the brush part (72), the brush-cleaning part (74) being disposed along the rotational axis direction of the brush part (72) and having a pectinate shape in contact with the brush part (72),
**characterized in** further comprising
a frame part (71) on which the brush-cleaning part (74) is mounted or integrated and the brush part (72) is detachably mounted; wherein
the brush-cleaning part (74) is provided so as not to intersect with the trajectory of the core (76) in the direction in which the brush part (72) is dismounted.

2. The filter-cleaning mechanism (40) of the air conditioner (1) according to claim 1, wherein
recesses (79a) between pectinate teeth (79) of the brush-cleaning part (74) are positioned farther radially inward than the external periphery of a circular trajectory made by the bristles (77).

3. The filter-cleaning mechanism (40) of the air conditioner (1) according to claim 2, wherein
a plurality of sheaves (78) of the bristles (77) is provided at predetermined intervals on the core (76); and
the arrangement of the sheaves (78) of the bristles (77) and the arrangement of the pectinate teeth (79) of the brush-cleaning part (74) are set so that the rotation of the brush part (72) causes a plurality of the sheaves (78) of the bristles (77) to be guided into a single recess (79a) of the pectinate teeth (79) of the brush-cleaning part (74).

4. The filter-cleaning mechanism (40) of the air conditioner (1) according to any of claims 1 through 3, further comprising:
a dust receiver (75) disposed below the brush-cleaning part (74); wherein
the brush-cleaning part (74) makes contact with the bristles (77) below the core (76).

5. The filter-cleaning mechanism (40) of the air conditioner (1) according to claim 4, wherein
the brush-cleaning part (74) is inclined to a side opposite to the direction in which the bristles (77) face the pectinate teeth (79) of the brush-cleaning part (74) in relation to the vertical direction.

6. An air conditioner (1), comprising the filter-cleaning mechanism (40) according to any of claims 1 through 5.

## Patentansprüche

1. Filterreinigungsmechanismus (40) einer Klimaanlage (1) mit:
einem Filter (21) zum Entfernen von Staub aus Luft, die dadurch hindurchgeht,
einem Bürstenteil (72) mit einem Kern (76) und mehreren Borsten (77), die an einer Umfangsoberfläche des Kerns (76) vorgesehen sind, wobei die Borsten (77) Staub von dem Filter (21) durch in Kontakt Treten mit dem Filter (21) entfernen,
einem Bürstenantriebsteil (73) zum Drehen des Bürstenteils (72) und
einem Bürstenreinigungsteil (74) zum Abwischen von Staub vom Bürstenteil (72) aufgrund der Drehung des Bürstenteils (72), wobei das Bürstenreinigungsteil (74) entlang der Drehachsenrichtung des Bürstenteils (72) vorgesehen ist und es eine kammförmige Gestalt in Kontakt mit dem Bürstenteil (72) hat,
**gekennzeichnet durch** weiteres Aufweisen von einem Gestellteil (71), an dem das Bürstenreinigungsteil (74) angebracht oder einstückig vorgesehen ist und an dem das Bürstenteil (72) lösbar angebracht ist, wobei
das Bürstenreinigungsteil (74) so vorgesehen ist, dass es nicht den Weg des Kerns (76) in der Richtung schneidet, in welcher das Bürstenteil (72) demontiert wird.

2. Filterreinigungsmechanismus (40) einer Klimaanlage (1) nach Anspruch 1, bei dem
Ausnehmungen (79a) zwischen Kammzähnen (79) des Bürstenreinigungsteils (74) radial weiter innen als der äußere Umfang eines kreisförmigen Wegs sind, den die Borsten (77) beschreiben.

3. Filterreinigungsmechanismus (40) einer Klimaanlage (1) nach Anspruch 2, bei dem
mehrere Gruppen (78) an Borsten (77) mit vorher festgelegten Abständen an dem Kern (76) vorgesehen sind und
die Gruppen (78) an Borsten (77) und die Anordnung der Kammzähne (79) des Bürstenreinigungsteils (74) so gewählt sind, dass die Drehung des Bürstenteils (72) mehrere Gruppen (78) an Borsten (77) dazu bringt, in eine einzige Ausnehmung (79a) der Kammzähne (79) des Bürstenreinigungsteils (74) geführt zu werden.

4. Filterreinigungsmechanismus (40) einer Klimaanlage (1) nach einem der Ansprüche 1 bis 3, ferner mit:
einem Staubempfänger (75), der unterhalb des Bürstenreinigungsteils (74) vorgesehen ist, wobei
das Bürstenreinigungsteil (74) mit den Borsten (77) unterhalb des Kerns (76) in Kontakt tritt.

5. Filterreinigungsmechanismus (40) einer Klimaanlage (1) nach Anspruch 4, bei dem
das Bürstenreinigungsteil (74) zu einer Seite entgegengesetzt zu der Richtung geneigt ist, in der die Borsten (77) den Kammzähnen (79) des Bürstenreinigungsteils (74) in Bezug auf die vertikale Richtung gegenüberliegen.

6. Klimaanlage (1) mit dem Filterreinigungsmechanismus (40) nach einem der Ansprüche 1 bis 5.

## Revendications

1. Mécanisme de nettoyage de filtre (40) d'un climatiseur (1), comprenant :
un filtre ((21) destiné à éliminer la poussière de l'air qui le traverse ;
une partie brosse (72) présentant une partie centrale (76) et une pluralité de soies (77) situées dans une surface périphérique de la partie centrale (76), dans lequel les soies (77) éliminent la poussière du filtre (21) en entrant en contact avec le filtre (21) ;
une partie d'entraînement de brosse (73) destinée à faire tourner la partie brosse (72) ; et
une partie de nettoyage de brosse (74) destinée à racler la poussière de la partie brosse (72) à la suite de la rotation de la partie brosse (72), la partie de nettoyage de brosse (74) étant disposée le long de la direction de l'axe de rotation de la partie brosse (72) et présentant une forme de type peigne en contact avec la partie brosse (72),
**caractérisé en ce qu'**il comprend en outre :
une partie cadre (71) sur laquelle la partie de nettoyage de brosse (74) est montée ou intégrée et la partie brosse (72) est montée détachable ; dans laquelle
la partie de nettoyage de brosse (74) est censée ne pas croiser la trajectoire de la partie centrale (76) dans la direction dans laquelle la partie brosse (72) est démontée.

2. Mécanisme de nettoyage de filtre (40) du climatiseur (1) selon la revendication 1, dans lequel :
des évidements (79a) entre les dents de peigne (79) de la partie de nettoyage de brosse (74) sont positionnés plus loin radialement vers l'intérieur que la périphérie extérieure d'une trajectoire circulaire effectuée par les soies (77).

3. Mécanisme de nettoyage de filtre (40) du climatiseur (1) selon la revendication 2, dans lequel :
une pluralité de gerbes (78) de soies (77) sont situées à intervalles prédéterminés sur la partie centrale (76) ; et
l'agencement des gerbes (78) de soies (77) et
l'agencement des dents de peigne (79) de la partie de nettoyage de brosse (74) sont définis de sorte que la rotation de la partie brosse (72) amène une pluralité des gerbes (78) de soies (77) à être guidées à l'intérieur d'un seul évidement (79a) des dents de peigne (79) de la partie de nettoyage de brosse (74).

4. Mécanisme de nettoyage de filtre (40) du climatiseur (1) selon l'une quelconque des revendications 1 à 3, comprenant en outre :
un dispositif de réception de poussière (75) disposé au-dessous de la partie de nettoyage de brosse (74) ; dans lequel :
la partie de nettoyage de brosse (74) entre en contact avec les soies (77) au-dessous de la partie centrale (76).

5. Mécanisme de nettoyage de filtre (40) du climatiseur (1) selon la revendication 4, dans lequel :
la partie de nettoyage de brosse (74) est inclinée vers un côté opposé à la direction dans laquelle les soies (77) sont tournées vers les dents de peigne (79) de la partie de nettoyage de brosse (74) par rapport à la direction verticale.

6. Climatiseur (1), comprenant le mécanisme de nettoyage de filtre (40) selon l'une quelconque des revendications 1 à 5.
